# EUROPÄISCHE PATENTSCHRIFT

(11) **EP 1 709 871 B1**
(45) Veröffentlichungstag und Bekanntmachung des Hinweises auf die Patenterteilung: **01.10.2008**
(21) Anmeldenummer: 06007474.7
(22) Anmeldetag: 07.04.2006
(51) Int. Cl.: A01K 95/02

(54) **Wurfgewicht für den Angelsport**
Launch weight for sportfishing
Poids à lancer pour la pêche sportive

(30) Priorität: 08.04.2005 DE 202005005605 U; 21.10.2005 DE 102005050469; 14.02.2006 DE 202006002394 U
(43) Veröffentlichungstag der Anmeldung: 11.10.2006
(73) Patentinhaber: Küster, Horst, 48163 Münster (DE)
(72) Erfinder: Küster, Dagmar, 48163 Münster (DE)
(74) Vertreter: Habbel, Hans-Georg

(56) Entgegenhaltungen:
- DE-A1- 3 728 581
- DE-C1- 4 105 706
- GB-A- 2 078 472
- US-A- 3 180 052
- US-A- 5 027 545
- US-A1- 2004 134 119

## Beschreibung

Die Erfindung betrifft ein Wurfgewicht, insbesondere für den Angelsport bzw. Ösen hierfür.

Wurfgewichte für den Angelsport sind bereits aus der Praxis seit langem bekannt, und wenn sie als Posengewicht verwandt werden, dienen sie dazu, die Pose in Position im Wasser zu halten oder sie können als Grundgewicht verwandt werden, um hierdurch eine definierte Lage des Hakens am Gewässergrund zu ermöglichen.

Bei den bekannten Wurfgewichten für das Angeln in Binnengewässern wird hauptsächlich in Posen- und Grundgewichte unterschieden, wobei die Posengewichte hauptsächlich als Spaltbleikugeln an die Angelschnur gequetscht werden, während die Grundgewichte einen Kanal für die Angelschnur aufweisen. Somit ist es für den Angler erforderlich sowohl Posengewichte als auch Grundgewichte mit sich zu führen und dies in unterschiedlichen Gewichten als auch Formen, so dass es erforderlich ist, zur Auswahl unterschiedliche Gewichte zu bevorraten, was selbstverständlich platz- und kostenaufwendig ist.

Dokumente US-A-2004/13419, GB-A-2078472, DE-C-4105706, US-A-3180052, US-A-5027545, DE-A-3728581 offenbaren gattungsgemäße Wurfgewichte für den Angelsport.

Der Erfindung liegt daher die Aufgabe zugrunde, ein Wurfgewicht für den Angelsport derart auszubilden, dass es variabel eingesetzt werden kann, so dass variabel das gleiche Wurfgewicht entweder als Posen- oder als Grundgewicht zu verwenden ist und auch eine einfache Anpassung in Bezug auf das Gewicht des Wurfgewichtes möglich ist.

Diese der Erfindung zugrundeliegende Aufgabe wird zum einen durch die Lehre des kennzeichnenden Teils des Anspruches 1 gelöst.

Vorteilhafte Ausgestaltungen sind in den Unteransprüchen erläutert.

In vorteilhafter Ausgestaltung weist das Wurfgewicht eine Ösenhalterung mit Befestigungskörper auf, der mit dem Gewichtskörper verbindbar ist bzw. sich am Gewichtskörper abstützend ausgebildet ist.

Das Wurfgewicht kann in vorteilhafter Ausgestaltung eine Vertiefung aufweisen, in die sich der Befestigungskörper der Ösenhalterung hineinragend erstrecken kann und sich an den Wandungen der Vertiefung abstützend ausgebildet sein kann, z. B. durch ein Verklemmen, Verclipsen oder Verschrauben.

Der Gewichtskörper weist erfindungsgemäß einen Kanal auf, der an seinen beiden Endungen offen ausgebildet ist, so dass durch diesen Kanal eine Angelschnur hindurchgezogen werden kann.

In vorteilhafter Ausgestaltung kann der Befestigungskörper der Ösenhalterung im montierten Zustand durch diesen Kanal des Gewichtskörpers ragend ausgebildet sein, so dass sich auf der Oberseite des Kanals bzw. des Wurfgewichtes der Ösenkopf befindet und auf der davon abgewandten Unterseite kann der Befestigungskörper mit dem Wurfgewicht festgelegt sein, z. B. durch vom Befestigungskörper abstehende Haken, die sich an der Wandung abstützen oder durch sonstige Befestigungsmittel. Diese Befestigungsmittel können einteilig mit dem Befestigungskörper ausgebildet sein, z. B. durch die Ausbildung von Haken auf der dem Ösenkopf abgewandten Unterseite des Wurfgewichts oder die Befestigungsmittel des Befestigungskörpers können - nachdem dieser durch den Gewichtskörper hindurchgeschoben wurde - zweiteilig ausgebildet sein, z. B. durch die Verwendung von einer auf der Unterseite aufschraubbaren Schraube, eines aufsteckbaren Clips oder dergleichen.

In einem Auführungsbeispiel, welches nicht Teil der Erfindung ist, kann der Befestigungskörper der Ösenhalterung aus zwei oder mehr spreizbaren Schenkeln bestehen, die, nachdem sie zusammengedrückt wurden, durch den Kanal des Gewichtskörpers hindurchgesteckt werden können und die sich anschließend in montiertem Zustand wieder aufspreizen und somit für eine Befestigung der Ösenhalterung am Gewichtskörper sorgen.

In vorteilhafter Ausgestaltung ist das vorgeschlagene Wurfgewicht bzw. dessen Gewichtkörper aus bleifreiem Material hergestellt, um nach Verlust des Wurfgewichtes eine Kontaminierung des Gewässers oder des Bodens zu verhindern.

Die Ösenhalterung bzw. die Schnurhalterung ist in Form einer Öse ausgebildet sein, z. B. als Flügel-Ösenhalterung, die den Gewichtskörper tragend ausgebildet ist. Eine entsprechende Ausbildung, z. B. aus Draht oder einem anderen geeigneten Material, ermöglicht eine kostengünstige Herstellung dieser Flügel-Ösenhalterung und zudem, wenn gewünscht, die Anordnung mehrerer Ösenhalterungen in Art einer Kette hintereinander, so dass nicht nur eine Ösenhalterung unterschiedlich schwere Gewichtskörper bzw. Gewichtskörperanzahlen aufnehmen kann, sondern zudem durch die Verwendung mehrerer hintereinander verketteter Ösen eine zusätzliche Erhöhung des Wurfgewichtes erzielt wird.

Die Ösenhalterung oder auch die Flügel-Ösenhalterung ist länglich geformt und weist zumindest eine zu öffnende Schenkelendung auf, die das Auffädeln von weiteren Ösenhalterungen, Halteringen oder dergleichen in einfacher Weise ermöglicht.

Die länglich geformte Ösenhalterung ist sowohl für Posen- und Grundgewichte als auch für Pilker als Kunstköder bei der Hochseeangelei an ihrer Ober- und Unterseite jeweils um 180° zumindest einfach umgebogen, um hierdurch insbesondere für die größeren Gewichte bei kostengünstiger Herstellung eine hohe Tragkraft zu erreichen.

In vorteilhafter Ausgestaltung des Wurfgewichtes ist die Ösenhalterung mehrteilig ausgebildet, um durch insbesondere ansetzbare oder abnehmbare Teile der Ösenhalterung die Länge des Wurfgewichtes an den jeweiligen Einsatzzweck bzw. an das Gewässer anzupassen und einen fischtypischen Bewegungseffekt des Wurfgewichtes zu erzielen, der die Beißlust der Fische erhöhen kann.

Die einfache Ausgestaltung einer mehrteilig ausgebildeten Ösenhalterung wird dann erreicht, wenn die einzelnen Ösenhalterungen kettenartig miteinander verbunden sind.

In vorteilhafter Ausgestaltung weist das Wurfgewicht einen Gewichtskörper auf, der aus einem oder mehreren Einzelgewichten besteht, um durch diese Auflösung des Gewichtskörpers in Einzelgewichte eine optimale Anpassung des Wurfgewichtes an den jeweiligen Einsatzzweck zu ermöglichen. Dabei können die Einzelgewichte in vorteilhafter Ausgestaltung als Scheiben ausgebildet sein, die, um eine einfache Halterung auf dem Wurfgewicht zu ermöglichen mit einer Lochung versehen sein können.

Ausführungsbeispiele, die nicht Teil der Erfindung sind, werden in den Zeichnungen 1 bis 7b dargestellt, und

Ausführungsbeispiele der Erfindung werden in den Zeichnungen 8 bis 13 dargestellt, wobei
- Fig. 1: eine Ösenhalterung für Wurfgewichte darstellt,
- Fig. 2: verdeutlicht ein weiteres Ausführungsbeispiel einer Ösenhalterung,
- Fig. 3: zeigt ein Wurfgewicht im Teilschnitt mitsamt einer Ösenhalterung,
- Fig. 4: zeigt ein Wurfgewicht mitsamt zwei Ösenhalterungen,
- Fig. 5: zeigt ein weiteres Ausführungsbeispiel einer Ösenhalterung, die
- Fig. 6 u. 7a, 7b: zeigen weitere Ausführungsbeispiele mitsamt mehrerer Einzelgewichte,
- Fig. 8, 9 u. 10: zeigen Ösenhalterungen mit Laufschnurbzw. Sperr-Flügelösen
- Fig. 11 u. 12: zeigen Ösenhalterungen mit SperrFlügelösen und Sperr-Ringen und
- Fig. 13: Ausführungsformen einer Schnur- und mehreren Ösenhalterungen.

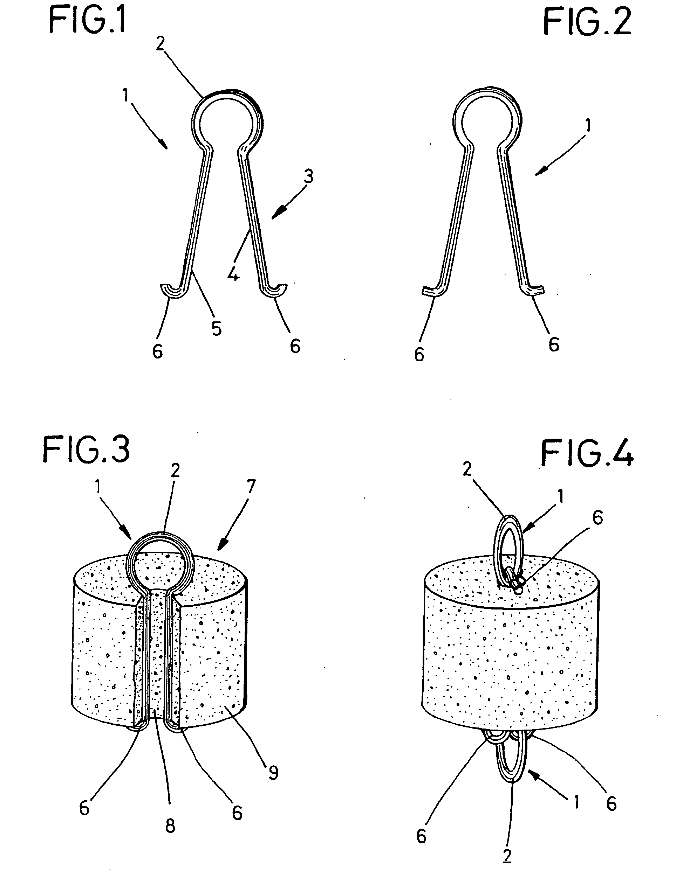

In Fig. 1 ist eine Ösenhalterung 1 dargestellt, welche Ösenhalterung nicht Teil der Erfindung ist, die aus einer Kopf-Öse 2 und einem Befestigungskörper 3 besteht, der in diesem Ausführungsbeispiel aus zwei Spreizschenkeln 4 und 5 besteht, die an ihrer der Kopf-Öse 2 abgewandten Unterseite seitlich abstehende Fuß-Haken 6 aufweisen. Die Spreizschenkel 4, 5 können bei einem Druck von außen zusammengedrückt werden, so daß sich der Abstand der Innenseiten der Spreizschenkel 4, 5 verringert. Die Spreizschenkel 4, 5 können auch mit Hilfe eines Stiftes manuell gekreuzt werden. Die Kopf-Öse 2 kann dafür verwendet werden, mehrere Wurfgewichte miteinander zu verketten. Die Kopf-Öse 2 kann jedoch auch lediglich als Haltevorrichtung für den Gewichtskörper 9 dienen, während die Hauptangelschnur über eine weitere in diesem Ausführungsbeispiel nicht dargestellte Zusatz-Kopf-Öse 11 oder Fuß-Öse 27 geführt wird.

In Fig. 2 ist ein weiteres Ausführungsbeispiel einer Ösenhalterung 1 dargestellt, welches nicht Teil der Erfindung ist, wobei die dort abgebildeten Fuß-Haken 6 nicht bogenförmig, wie in Fig. 1, sondern gerade ausgebildet sind. Der Winkel zwischen Fuß-Haken 6 und Spreizschenkel 4, 5 kann von unterschiedlicher Größe sein. Die Ösenhalterung 1 ist in diesem Ausführungsbeispiel ca. 1,5 cm lang und besteht aus rostfreiem Metall, wobei jedoch Länge und Stärke sowie das Material je nach Ausführungsart variieren kann.

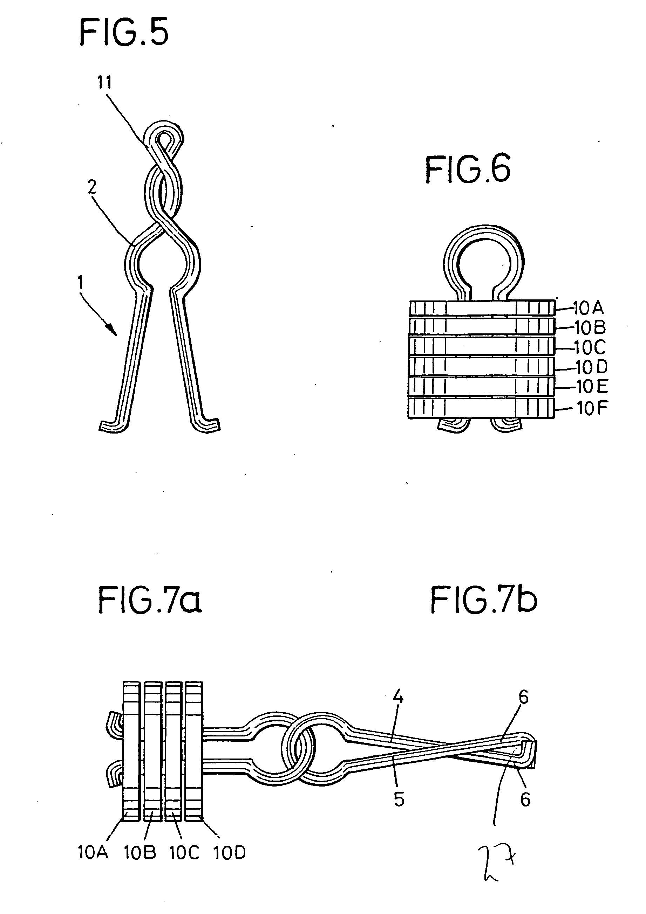

Zur Montage eines Wurfgewichtes für den Angelsport werden die Spreizschenkel 4 und 5 unter Verwendung einer Ahle oder eines schmalen Schraubendrehers gegeneinander um deutlich über 180° verdreht, so daß die Spreizschenkel 4 und 5 mittig übereinander gekreuzt sind, bis die Fuß-Haken 6 nach innen gestellt unter erheblicher Spannung übereinander rutschen und damit eine kleine Fuß-Öse 27 bilden. In dieser Fuß-Ösenformation (Fig. 7b) können die Spreizschenkel 4 und 5 eng aneinander liegend, zusammen mit den nach innen gestellten Fuß-Haken 6 problemlos in den an seinen beiden Seiten offenen Kanal 8 eines Gewichtskörpers 9 des Wurfgewichtes 7 (Fig. 3 bzw. Fig. 6) eingeführt werden, bis die Fuß-Haken 6 auf der der Kopf-Öse 2 gegenüberliegenden Seite des Gewichtskörpers 9 aus dem Kanal 8 austreten. Die Spreizschenkel 4 und 5 werden anschließend geöffnet, indem die Spitze des Schraubendrehers durch die Fuß-Öse 27 geschoben wird, um anschließend die Fuß-Haken 6 soweit auseinander zu drehen, daß die Spreizschenkel 4 und 5 sich wieder sprungartig öffnen, so daß die Fuß-Haken 6 an den Randbereichen des Kanals 8 des Gewichtskörpers 9 aufliegen bzw. den Gewichtskörper 9 hintergreifen und dadurch bei einem Zug an der Kopf-Öse 2 verhindern, daß die Ösenhalterung 1 aus dem Kanal 8 gezogen wird.

Die Fuß-Haken 6 sind einteilig mit den Spreizschenkeln 4, 5 bzw. mit dem Befestigungskörper 3 verbunden, um eine besonders kostengünstige Herstellung zu erreichen. Es ist jedoch auch möglich, separate Befestigungsmittel zu verwenden, die nach einem Hindurchschieben des Befestigungskörpers 3 durch den Kanal mit dem Befestigungskörper 3 verbunden werden können, wie z. B. Clipse oder Schraubmuttern od. dgl., die mit den Schenkeln des Befestigungsktirpers 3 auf der der Kopf-Öse 2 abgewandten Seite des Gewichtskörpers 9 verbunden werden können, um wiederum bei einem Zug auf die Kopf-Öse 2 ein Herausziehen der Ösenhalterung 1 aus dem Gewichtskörper 9 zu verhindern.

In Fig. 3 ist ein Wurfgewicht 7, der nicht Teil der Erfindung ist, mit einem mittig angeordneten Kanal 8 dargestellt, der aufgebrochen ist. Der tatsächliche Gewichtskörper 9 weist jedoch einen rundum geschlossenen Kanal 8 auf. Entsprechend Fig. 3 ist es möglich, eine Ösenhalterung 1 in den Kanal 8 einzuführen. Es ist jedoch auch entsprechend Fig. 4 möglich, jeweils eine Ösenhalterung 1 von je einer Seite des Gewichtskörpers 9 in den Kanal 8 einzuführen.

Wie in Fig. 4 dargestellt, ist es möglich, zwei Ösenhalterungen 1 mit jeweiligen Kopf-Ösen 2 an dem Wurfgewicht 7 bzw. Gewichtskörper 9 zu befestigen. Ebenso ist es möglich, von beiden Seiten des Gewichtskörpers 9 zur Verstärkung jeweils zwei Ösenhalterungen 2 zu fixieren.

Selbstverständlich ist es möglich, mehrere Wurfgewichte 7 miteinander über die Kopf-Ösen 2 zu verketten, wenn ein höheres Gewicht benötigt wird.

Der Gewichtskörper 9 des Wurfgewichtes 7 besteht in vorteilhafter Ausgestaltung aus bleifreiem Material, um eine Kontaminierung der Gewässer bei einem Verlust des Wurfgewichtes 7 zu verhindern. Dabei kann der Gewichtskörper 9 beispielsweise aus bleifreiem Metall bestehen oder aus Stein oder aus einem Formkörper, der aus einem keramischen Werkstoff gebildet ist, wie z. B. einem Steinzeug.

Der Kanal 8 des Gewichtskörpers 9 kann bei Wurfgewichten aus Stein oder keramischen Werkstoff vorteilhafter Ausgestaltung mit einer Wandung ausgestaltet sein, die sich vom übrigen Material des Gewichtskörpers 9 unterscheidet, um eine besondere Gleitfähigkeit der Angelschnur zu erreichen, die in dem Kanal 8 geführt wird, wenn das Wurfgewicht 7 als Grundgewicht verwandt wird. Bei dieser Auskleidung des Kanals kann es sich z. B. um eine Kunstoffwandung handeln.

In Fig. 5 wird ein weiteres Ausführungsbeispiel dargestellt, welches nicht Teil der Erfindung ist, wobei die dort dargestellte Ösenhalterung 1 neben der bereits bekannten Kopf-Öse 2 eine weitere Zusatz-Kopf-Öse 11 aufweist mit einem sehr geringen Innendurchmesser, so daß die Kopf-Öse 2 in diesem Ausführungsbeispiel lediglich die Funktion hat, eine Haltevorrichtung für den Gewichtskörper 9 auszubilden. Die Zusatz-Kopf-Öse 11 dient zur Führung der Hauptangelschnur als Laufschnur. Diese wird, ohne das Grundgewicht zu bewegen, vom Fisch nach dem Anbiß durch die Zusatz-Kopf-Öse 11 gezogen. Aufgrund ihres geringen Durchmessers wird beim Ein- und Ausbringen des Wurfgewichtes 7 ein Durchrutschen des Wurfgewichtes 7 über einen Wirbel oder Karabinerhaken, der zwischen Haupt- und Vorfachschnur installiert ist, verhindert. Außerdem dient die Zusatz-Kopf-Öse 11 auch zur Aufnahme von Einfach- und Mehrfachhaken oder als Verbindungselement. In diesem Ausführungsbeispiel ist die Zusatz-Kopf-Öse 11 durch das Verbiegen des Materials der Ösenhalterung 1 entstanden. Selbstverständlich kann diese Zusatz-Kopf-Öse 11 auch durch eine zweite Ösenhalterung 1 ersetzt werden, die an eine Ösenhalterung 1 mit Gewichtskörper 9 befestigt ist.

Wie aus den Fig. 6 und 7 ersichtlich wird, ist es möglich, daß die Gewichtskörper 9 nicht nur einteilig ausgebildet sind, sondern auch aus unterschiedlich schweren Einzelgewichten 10a - 10f bestehen können, die in diesem Ausführungsbeispiel, welches nicht Teil der Erfindung ist lösbar von der Ösenhalterung 1 befestigt sind, so daß es möglich ist, ein, zwei oder mehrere Einzelgewichte 10 auf der Ösenhalterung 1 anzuordnen, wobei eine Zunahme der Anzahl der Einzelgewichte 10 selbstverständlich eine Zunahme des Gewichtes ergibt. Hierdurch ist es möglich, eine genaue Anpassung des Gewichtes des Gewichtskörpers 9 an die jeweils anzutreffenden Verhältnisse zu ermöglichen.

Die Einzelgewichte 10 sind in diesem Ausführungsbeispiel, welches nicht Teil der Erfindung ist scheibenartig ausgebildet, wobei eine zentrale Öffnung in diesen einzelnen Scheiben der Einzelgewichte 10 vorgesehen ist, so daß mehrere übereinander gestapelte Einzelgewichte 10 einen durchgehenden Kanal aufgrund ihrer Öffnungen ergeben. Selbstverständlich können die Einzelgewichte 10 nicht nur scheibenförmig, sondern auch röhrenförmig oder auch andere Formen von Kugel bis Würfel, von Quader bis Zylinder aufweisen, wofür sich eckig gelochte Scheiben eignen; es ist ebenfalls möglich, nicht mittige Öffnungen wie im Ausführungsbeispiel zu verwenden, sondern auch außermittige Öffnungen bzw. sogar mehrere Öffnungen.

Wie aus Fig. 7a ersichtlich ist, kann die Kopf-Öse 2, die hier eine Haltevorrichtung für die Einzelgewichte 10a - 10d darstellt, ebenfalls eine Verbindung zu einer weiteren Ösenhalterung 1 in der Fig. 7b sein, die in diesem Ausführungsbeispiel mit gegeneinander verdrehten Spreizschenkeln 4, 5 im Bereich der miteinander verschränkten Fuß-Haken 6 eine lösbare Fuß-Öse 27 ausbildet, durch die eine Hauptangelschnur als Laufschnur an einer fertigen Rutenmontage nachträglich hindurchgeführt werden kann.

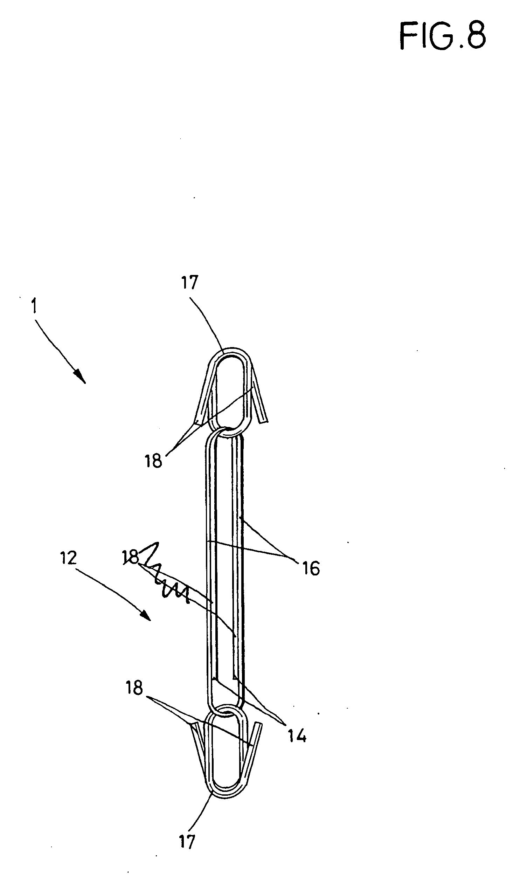

In Fig. 8 ist ein Ausführungsbeispiel der Erfindung dargestellt, wobei die Ösenhalterung 1 in Form von drei länglichen Flügel-Ösen vorhanden ist. Die Träger-Flügelöse 12 besteht in diesem Ausführungsbeispiel aus einem Draht bzw. vergleichbarem Material, das an zwei gegenüberliegenden Seiten um 180° einfach oder mehrfach umgebogen wurde und an. beiden Schenkelendungen 14 geöffnet werden kann. Die gezeigte Ausführungsform der Träger-Flügelöse 12 ist büroklammerähnlich ausgebildet.

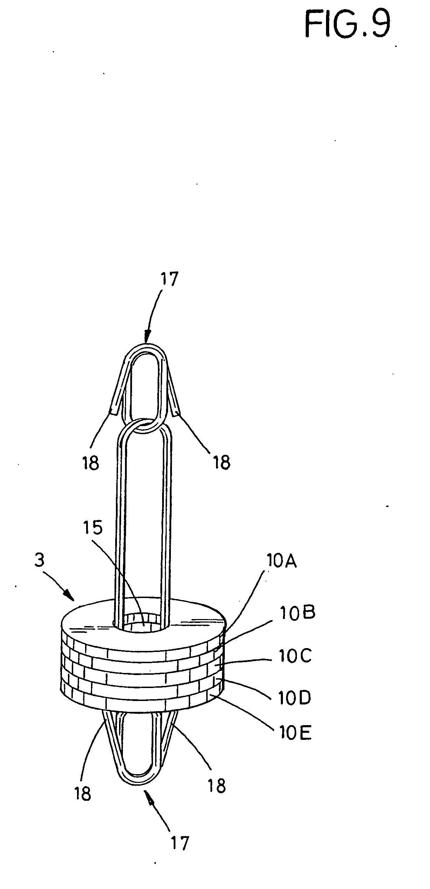

Auf diese Träger-Flügelöse 12 können - wie aus Fig. 9 ersichtlich ist - Einzelgewichte 10a bis 10e aufgeschoben werden, die dann den Gewichtskörper ausbilden. In diesem Ausführungsbeispiel handelt es sich bei den Einzelgewichten 10a bis 10e um scheibenartige Körper, die in der Mitte eine Ausnehmung 15 aufweisen, deren Innendurchmesser dem Außenabstand der Schenkel 16 der Träger-Flügelöse 12 angepasst sind, so dass ein einfaches Aufschieben der Gewichtskörper 10 auf die Träger-Flügelöse 12 möglich ist. Je nach Bedarf können ein oder mehrere Gewichtskörper 10 auf die Träger-Flügelöse 12 aufgeschoben werden, so dass durch Verwendung von mehr oder weniger bzw. größeren oder kleineren Einzelgewichten das Gewicht und die Form des aus diesen Einzelgewichten resultierenden Gewichtskörpers an den jeweiligen Einsatzzweck angepasst werden kann. Das aus Ösenhalterung 1 und Gewichtskörper ausgebildete Gewicht ist als Grundgewicht zu verwenden.

In den gezeigten Ausführungsbeispielen der Fig. 8 bis 10 sind an den Endungen der Träger-Flügelöse 12 jeweils Sperr-Flügelösen 17 angehängt, um die Einzelgewichte 10 auf der Träger-Flügelöse 12 zu halten. Da die Sperr-Flügelösen 17 aus einem stärkeren Draht ausgebildet sein können, verringert sich gegenüber der Träger-Flügelöse 12 der lichte Durchmesser, so dass eine der Sperr-Flügelösen 17 gleichzeitig als Laufschnur-Öse genutzt werden kann. Diese Sperr-Flügelösen 17 sind eine hervorragende und einfach zu montierende, und dennoch sehr haltbare Halterung für den Gewichtskörper auf der Träger-Flügelöse 12.

In diesem Ausführungsbeispiel sind als Halterungen Sperr-Flügelösen 17 vorgesehen, die ebenfalls büroklammerartig ausgebildet sind und aus Draht ausgebildet sein können. Sie weisen zu öffnende Schenkelendungen 18 auf, so dass sie in einfacher Weise mit der Träger-Flügelöse 12 verbunden werden können. Außerdem besteht ihr besonderer Vorteil gegenüber herkömmlichen Gewichten darin, dass auch die Schnur zwischen den Flügeln an einer fertigen Angelrutenmontage eingehängt oder auch abgenommen werden kann. Selbstverständlich können auch ringförmige Ösen verwandt werden, die über die zu öffnenden Schenkelendungen 14 der Träger-Flügelöse 12 mit der Träger-Flügelöse 12 befestigt werden können. Jede Form von Sperr-Flügelöse 17 übertrifft im Durchmesser den Innendurchmesser der Ausnehmungen 15 der Einzelgewichte 10 bzw. des Gewichtskörpers 3 und verhindert somit ein Abrutschen derselben von der Träger-Flügelöse 12.

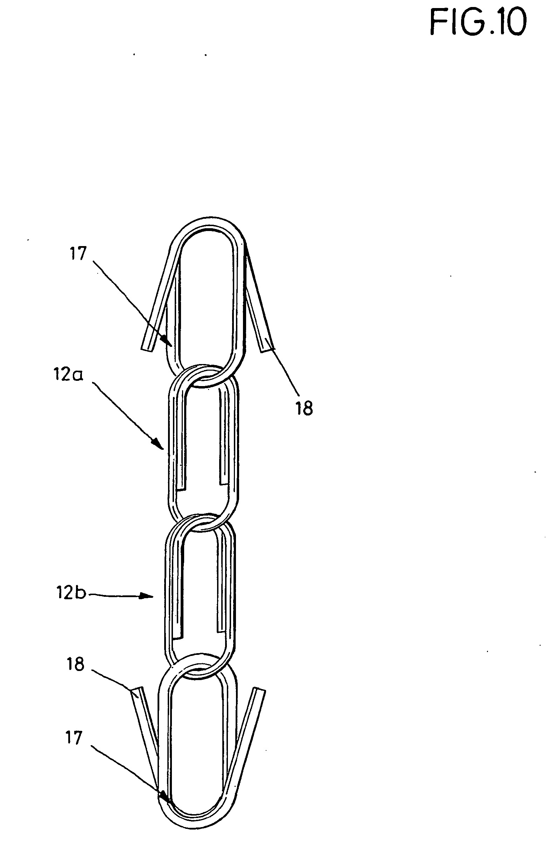

Wie in Fig. 10 dargestellt ist, können zwei oder mehr Träger-Flügelösen 12a, 12b miteinander kombiniert ausgebildet sein, so dass sie kettenartig miteinander ausgebildet sind, um hierdurch das Gewicht eines durch mehrere Träger-Flügelösen 12 ausgebildeten Wurfgewichtes zusätzlich zu erhöhen. Darüber hinaus werden durch eine derartige Ösenhalterungskette fischtypische Bewegungseffekte erzielt und damit die Beißlust der Fische angesprochen.

Sofern lediglich eine Träger-Flügelöse 12 verwandt wird, ergibt sich ein starres Wurfgewicht, das als Raubfischköder zum Angeln, insbesondere zum Hochseefischfang genutzt werden kann. Dabei ist es nicht erforderlich, dass die Träger-Flügelöse 12 gerade ausgebildet ist, sondern sie kann auch beispielsweise gekrümmt ausgebildet sein und z. B. mit gelochten Scheiben oder Röhren bestückt sein.

Ein wesentlicher Vorteil der vorgeschlagenen Ösenhalterung 1 für ein Wurfgewicht ist, dass sie hinsichtlich ihrer Länge, ihrer Form, ihres Gewichtes und ihrer Biegsamkeit eine große Flexibilität ermöglicht und an unterschiedlichste Bedürfnisse des Angelsportes angepasst werden kann.

Die freien Ösenschenkel 18 liegen bei der Verwendung von Einzelgewichten 10 entsprechend Fig. 9 eng an diesen Einzelgewichten an, so dass sich die Schenkelendungen 14 bei Zugbelastung auf die Träger-Flügelöse 12 bei den im Angelsport zu erwartenden Kräften nicht auffalten können. Durch diesen Effekt wird die Tragkraft der Träger-Flügelöse 12 erheblich gesteigert.

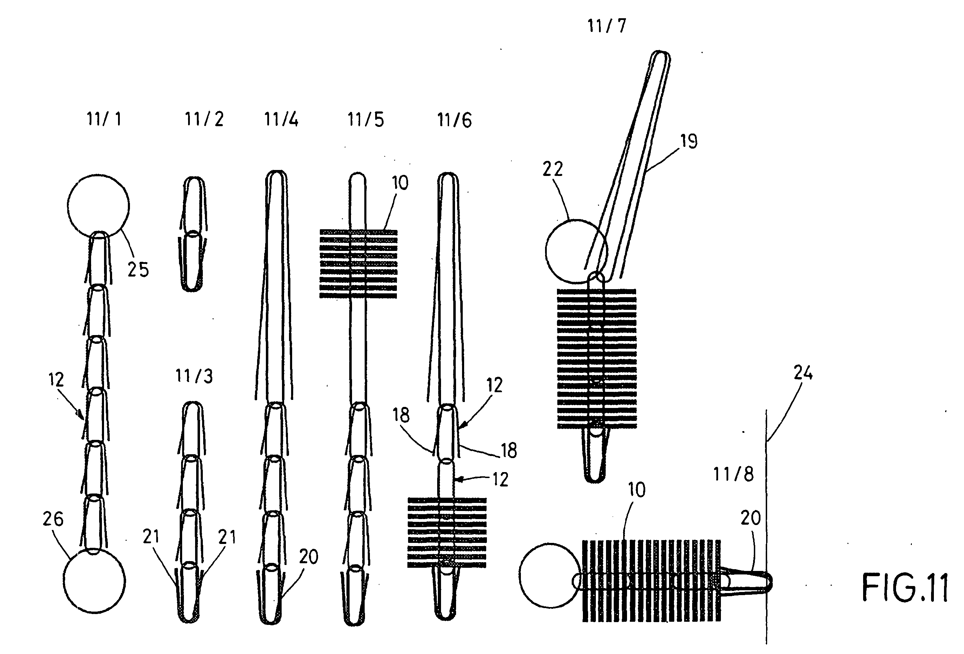

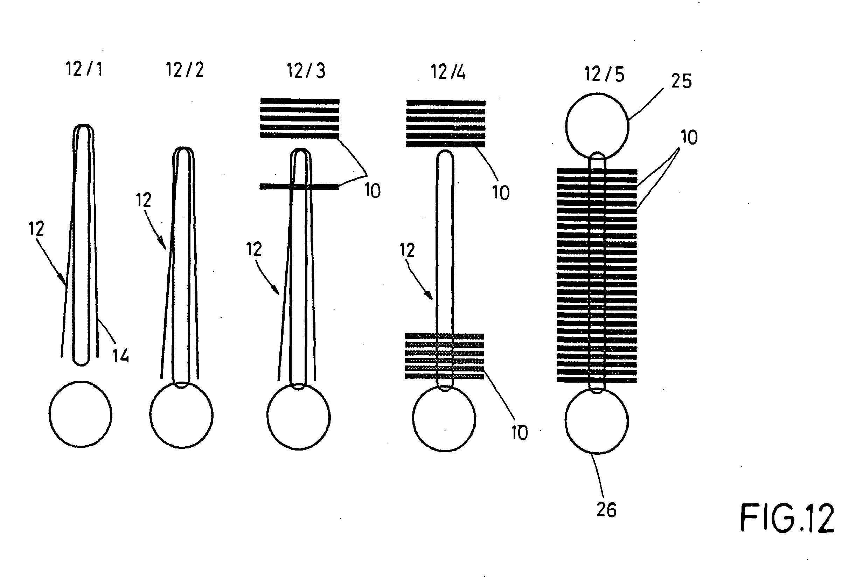

Bezug nehmend auf die Fig. 11 und 12 wird für Wurfgewichte eine Ösenhalterung 1 bzw. eine Träger-Flügelöse 12 verwendet, die den Gewichtskörper trägt. In diesem Fall wird der Gewichtskörper wiederum durch mehrere Einzelgewichte 10 gebildet. Diese Einzelgewichte 10 können in vorteilhafter Weise scheibenartig ausgebildet sein, die Löcher aufweisen, wie bereits in Fig. 9 dargestellt. Die Löcher können außer einer runden auch andere Formen haben, z. B. quadratisch, rechteckig, geschlitzt oder oval. Eine nicht-runde Ausbildung, wie z. B. ein quadratisches Innenloch, hat den Vorteil, dass bei entsprechender Ausbildung der Ösenhalterung 1 zwar eine Bewegung des Einzelgewichtes in Längsrichtung der Ösenhalterung 1 möglich ist, aber das Einzelgewicht sich nicht rund um die Ösenhalterung 1 drehen kann. Die Lochung der Einzelgewichte ermöglicht es, verschiedene äußere Formen der Wurfgewichte zu gestalten, wie beispielsweise rund, quadratisch, dreieckig oder oval. Durch die Aufreihung unterschiedlich großer Scheiben lässt sich der Umfang der einzelnen Formen variieren.

Über eine lange so genannte "Flügel-Öse" 19 wird, wie aus den Fig. 11.4 bis 11.7 sichtlich, in einfacher Weise die Einzelgewichte 10 auf die unterhalb der langen Flügel-Öse angeordneten Träger-Flügelösen 12 aufgeschoben. Wahlweise können mehrere Träger-Flügelösen 12 kettenartig miteinander verbunden werden. Das unterste Glied einer derartigen Kettenmontage von Träger-Flügelösen 12 ist eine Sperr-Flügelöse 20, die sich durch einen starken Draht mit geringerer lichten Weite von den anderen Träger-Flügelösen 12 unterscheidet. Mit den Flügelspitzen 21 in Richtung der Kettenmontage von Träger-Flügelösen 12 richtet sich die Sperrflügel-Öse 20 gegen die Einzelgewichte 10 und hindert diese am Abrutschen. Bevor der "Ladevorgang" der Kettenmontage von Träger-Flügelösen 12 beginnt, zeigen die freien Ösenschenkel 18 der Träger-Flügelösen 12 nach unten. Nach dem "Beladen" der Träger-Flügelösen 12 kann die lange Flügel-Öse 19 abgenommen werden, wenn zuvor ein Ring 22 in die oberste Träger-Flügelöse 12 eingebracht wurde (Abbildung Fig. 11/7). Damit ist das Wurfgewicht vollständig und kann z. B. mit der Sperrflügel-Öse 20 auf eine Laufschnur 24 gefädelt werden (Fig. 11/8). Zwischen Vorfach und Hauptschnur wird die Sperrflügel-Öse 20 beim Wurf vom Wirbel passender Größe gestoppt.

Die Montage eines Pilkers unterscheidet sich gegenüber der Grundgewichtsmontage nur durch die Anbringung von Ringen 25, 26 an beiden Enden (vergleiche Fig. 11/1).

Die Fig. 12/1 bis 12/5 zeigen die Montage eines Pilkers in fester Form mit einer Träger-Flügelöse 12 ausreichender Länge.

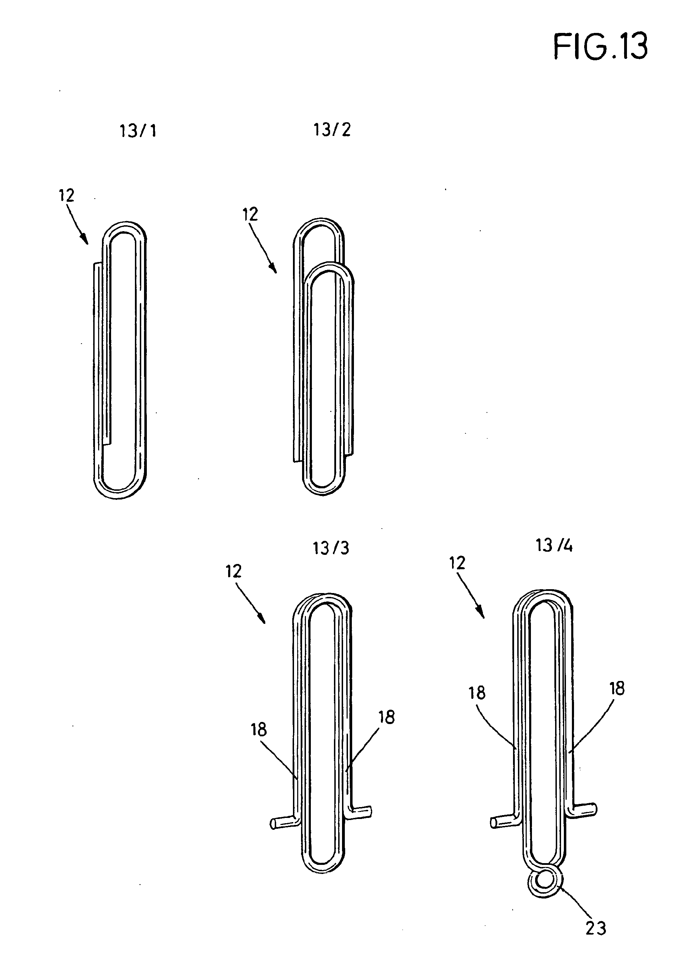

In Fig. 13 sind weitere Ausführungsformen von Träger-Flügelösen 12 dargestellt, wobei entsprechend Fig. 13/3 die freien Endungen der Ösenschenkel 18 nach außen abgebogen sind, um hierdurch eine Sperrwirkung für auf der Träger-Flügelöse 12 angeordnete Einzelgewichte oder Gewichtskörper auszubilden und entsprechend Fig. 13/4 befindet sich an der Ösenhalterung 12 neben den abgewinkelten freien Endungen der Schenkel 18 eine Öse 23 z. B. für die Angelschnur.

## Patentansprüche

1. Wurfgewicht, insbesondere für den Angelsport, mit einem einen Kanal aufweisenden Gewichtskörper und einer im Kanal des Gewichtskörpers lösbar angeordneten Ösenhalterung, **gekennzeichnet durch** die Ösenhalterung (1), die mindestens eine Träger-Flügelöse (12) aufweist, die büroklammerähnlich an ihren zwei gegenüberliegenden Seiten um 180° umgebogen ist und zwei parallel zueinander verlaufende Schenkel (16) mit gleich gerichteten freien Schenkelendungen (14) aufweist, wobei der Gewichtskörper (9) auf die Träger-Flügelöse (12) aufschiebbar ist.

2. Wurfgewicht gemäß Anspruch 1, **gekennzeichnet durch** an den Endungen der Träger-Flügelöse (12) angeordnete ringförmige Ösen bzw. Sperr-Flügelösen (17), die mit gespreizten Flügeln einen größeren Durchmesser aufweisen als der Innendurchmesser der Ausnehmung des Gewichtskörpers (9).

3. Wurfgewicht gemäß Anspruch 2, **gekennzeichnet durch** die Sperr-Flügelösen (17), die büroklammerartig ausgebildet sind und zwei zu öffnende, freie Schenkelendungen (18) aufweist.

4. Wurfgewicht gemäß einem der vorhergehenden Ansprüche, **gekennzeichnet durch** den aus bleifreiem Material ausgebildeten Gewichtskörper (9).

5. Wurfgewicht gemäß einem der vorhergehenden Ansprüche, **gekennzeichnet durch** die mehrteilig ausgebildete Ösenhalterung (1).

6. Wurfgewicht gemäß Anspruch 5, **gekennzeichnet durch** mehrere kettenartig miteinander verbundene Ösenhalterungen (1).

7. Wurfgewicht gemäß einem der vorhergehenden Ansprüche, **gekennzeichnet durch** den aus einem oder mehreren Einzelgewichten (10) ausgebildeten Gewichtskörper (9).

8. Wurfgewicht gemäß Anspruch 7, **gekennzeichnet durch** die Einzelgewichte (10), die scheiben- oder röhrenförmig ausgebildet sind.

## Claims

1. Launch weight, particularly for sport fishing, having a weight body incorporating a groove and an eyelet mount detachably disposed in the groove of the weight body, **characterised by** an eyelet mount (1) which incorporates at least one bearing wing eyelet (12) which is bent through 180° on its two opposing sides in the form of a paper clip and having two end portions (16) running parallel to each other and having equally straightened end portion ends (14), where the weight body (9) can be pushed onto the bearing wing eyelet (12).

2. Launch weight in accordance with claim 1, **characterised by** ring-shaped eyelets or retaining wing eyelets (17) disposed at the ends of the bearing wing eyelet (12), which ring-shaped or retaining wing eyelets (17) with spread wings have a larger diameter than the inside diameter of the recess in the weight body (9).

3. Launch weight in accordance with claim 2, **characterised by** the retaining wing eyelets (17), which are constructed like paper clips and have two free end portion ends (18) which have to be opened.

4. Launch weight in accordance with any one of the foregoing claims, **characterised by** the weight body (9) constructed from lead-free material.

5. Launch weight in accordance with any one of the preceding claims, **characterised by** the eyelet mount (1) constructed in a number of parts.

6. Launch weight in accordance with claim 5, **characterised by** a number of eyelet mounts (1) linked together in the form of a chain.

7. Launch weight in accordance with any one of the foregoing claims, **characterised by** a weight body (9) constructed from one or more individual weights (10).

8. Launch weight in accordance with claim 7, **characterised by** the individual weights (10), which are constructed disk-shaped or tubular.

## Revendications

1. Poids à lancer, notamment pour la pêche sportive, avec un corps officiant de poids présentant un conduit, et avec une fixation à oeillet agencée détachable dans le conduit du corps officiant de poids, **caractérisé par** la fixation (1) à oeillet, laquelle présente au moins un oeillet (12) porteur à ailettes dont les deux extrémités d'oeillet se faisant face sont, similairement à un trombone, incurvées à 180° et présentent deux branches (16) au tracé parallèle et à extrémités (14) libres orientées dans le même sens, le corps (9) du poids étant enfilable sur l'oeillet (12) porteur à ailettes.

2. Poids à lancer selon la revendication 1, **caractérisé par** des oeillets annulaires ou oeillets (17) de blocage à ailettes situés aux extrémités de l'oeillet (12) porteur à ailettes, lesquels oeillets de blocage présentent, ailettes écartées, un diamètre supérieur au diamètre intérieur de l'évidement que comporte le corps (9) du poids.

3. Poids à lancer selon la revendication 2, **caractérisé par** des oeillets (17) à ailettes de blocage, de forme rappelant un trombone et présentant deux extrémités (18) de branche libres à ouvrir.

4. Poids à lancer selon l'une des revendications précédentes, **caractérisé par le fait que** le corps officiant de poids (9) est composé de matériau sans plomb.

5. Poids à lancer selon l'une des revendications précédentes, **caractérisé par** la fixation (1) d'oeillet se présentant en plusieurs parties.

6. Poids à lancer selon la revendication 5, **caractérisé par** plusieurs fixations (1) à oeillet reliées entre elles telles une chaîne.

7. Poids à lancer selon l'une ou plusieurs des revendications précédentes, **caractérisé par** un corps (9) officiant de poids lui-même composé d'un ou plusieurs poids (10) individuel(s).

8. Poids à lancer selon la revendication 7, **caractérisé par** des poids (10) individuels réalisés en forme de disques ou de tubes.
